# EUROPEAN PATENT SPECIFICATION

(11) **EP 0 968 897 B1**
(45) Date of publication and mention of the grant of the patent: **03.07.2002**
(21) Application number: 99830028.9
(22) Date of filing: 26.01.1999
(51) Int. Cl.: B60T 17/22, B60T 13/66

(54) **Method and system for determining automatically the composition of a trackbound train**
Verfahren und System für selbsttätige Ermittlung der Zusammenstellung eines schienengebundenen Zuges
Méthode et système à détermination automatique de la composition d'un train sur rails

(30) Priority: 29.06.1998 IT TO980560
(43) Date of publication of application: 05.01.2000
(73) Proprietor: SAB WABCO S.p.A., I-10045 Piossasco (Torino) (IT); Alstom Transport S.A., 75116 Paris (FR)
(72) Inventor: Barberis, Dario, 10045 Piossasco (Torino) (IT); Tione, Roberto, 10045 Piossasco (Torino) (IT)
(74) Representative: Marchitelli, Mauro

(56) References cited:
- EP-A- 0 808 761
- US-A- 5 651 517
- US-A- 5 681 015
- SONDER E: "ELEKTRISCHE/ELEKTRONISCHE BREMS-ABFRAGE UND STEUERUNG FUR GUTERZUGE" ZEITSCHRIFT FUR EISENBAHNWESEN UND VERKEHRSTECHNIK. DIE EISENBAHNTECHNIK + GLASERS ANNALEN,DE,GEORG SIEMENS VERLAGSBUCHHANDLUNG. BERLIN, vol. 119, no. 11/12, 1 November 1995 (1995-11-01), pages 505-509,512, XP000546707 ISSN: 0941-0589

## Description

The present invention relates to a method and a system for automatically determining the composition of a trackbound train.

Modern systems for administering and controlling trackbound traffic need reliable information on a series of parameters relating to the trains circulating on the rail network. US-A-5651517 discloses a method of automatic train serialization including providing a parameter which varies along the length of the train and transmitting a synchronization signal along the length of the train to the local nodes at each car. The parameter is measured at each node with respect to the occurrence of the synchronization signal at the node. Serialization of the cars is then performed as a function of the measured parameters. One method is to provide the parameters by transmitting a serial signal which propagates through the train at a slower rate than the synchronization signal and then measuring the difference in time between the receipt of the synchronization and the serial signal at each node.

Recently, the companies administering rail networks are more and more interested in obtaining automatically reliable information on the composition of trackbound trains, without however installing complex detecting systems.

In order to satisfy this demand, the object of the present invention is a method and a system for automatically determining the composition of a trackbound train, having the features forming the subject of the claims.

The method and the system according to the present invention take advantage of a physical principle characteristic of pneumatic braking systems for trains, more precisely, the invention is based on the observation of the fact that when a braking command is applied, a depression spike is generated which moves along the brake pipe of the braking system. The depression spike reaches the various railroad vehicles with a delay depending on the position of the vehicle in the train. Consequently, the present invention provides for generating a signal identifying the type of vehicle after detecting the depression spike generated by a braking command. by receiving the signals identifying all the vehicles of the train, it is possible to determine the layout of the vehicles along the train depending on the individual delays with which the various depression spikes are detected.

According to a particularly advantageous embodiment of the present invention, it is also possible to determine the orientation of each vehicle of the train.

Further characteristics and advantages of the present invention will become clear in the course of the detailed description which follows, given purely by way of non-limiting example, with reference to the attached drawings, in which:
- figure 1 is a schematic view of a trackbound train provided with a system according to the present invention,
- figure 2 is a schematic view showing a variant of the system of figure 1,
- figure 3 is a schematic view showing a generic vehicle of the train provided with a system adapted to enable determination of the orientation of the vehicle,
- figures 4 to 6 are schematic views showing a variant of the system of figure 3 for determining the orientation of the vehicles,
- figure 7 shows the graphs of the variation of the pressure in the brake pipe, during braking, for the various vehicles of a train, and
- figure 8 shows in greater scale the part indicated by the arrows VIII in the graphs of figure 7.

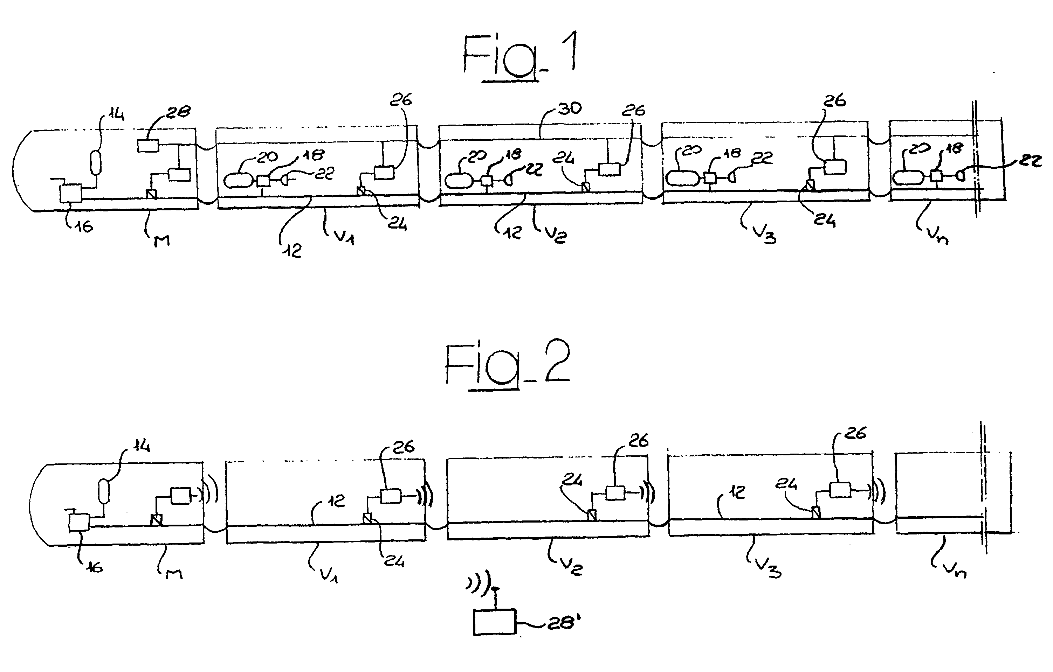

With reference to figure 1, the reference numeral 10 indicates a trackbound train including a locomotive M and a plurality of vehicles coupled to each other, indicated by V₁, V₂, V₃ and Vₙ. In a way per se known, the train 10 is provided with a pneumatic braking system including a brake pipe 12 extending from the locomotive to the last vehicle of the train. The braking system comprises essentially a main reservoir 14 (dedicated to the braking system) disposed on the locomotive M and connected to the brake pipe 12 by means of a brake valve 16.

On each vehicle V₁, V₂, V₃,...Vₙ is arranged a braking assembly including, in a way per known, a distributor 18 which, in a way per se known, is provided with at least an accelerating chamber, the distributor being pneumatically connected to an auxiliary reservoir 20 and to an actuator 22 mechanically connected to the drawbar controlling the brakes.

When the brakes are open, the brake pipe is at a normal pressure of 5 bar and all the auxiliary reservoirs 20 are at the same pressure of the brake pipe. When the pressure in the brake pipe is released through the control valve 16 for imparting a braking command, a depression is produced which starts from the valve 16 and propagates along the brake pipe 12 as far as the last vehicle of the train. As soon as the distributors 18 receive this depression, they put the general pipe in communication with the accelerating chambers (initially at atmospheric pressure) and subsequently put the auxiliary reservoir 20 in communication with brake control actuators 22, thereby producing a braking force proportional to the reduction of pressure.

The graphs of figure 7 show the variation of pressure P in the brake pipe as a function of the time t for the various vehicle forming the train 10. Braking of each vehicle begins at the moment in which the respective distributor 18 detects the passage of the depression indicated by S. In succession, starting from the head of the train, such depression causes the intervention of the respective distributors which connect directly the brake pipe to the accelerating chambers. In this manner a depression spike is obtained, which propagates to the other vehicles whose distributors repeat the same action. The result is that the depression spike is more and more evident towards the end of the train and has always the typical peak shape.

Therefore, the depression in correspondence with each vehicle V₁, V₂, V₃,...Vₙ begins with a delay Δt₁, Δt₂, Δt₃, and Δtₙ which depends on the distance of the vehicle from the locomotive and on the speed of propagation of the spike S along the brake pipe 12. The speed of propagation is constant and depends on the geometry of the braking system and, according to international standards, cannot be lower than 250 m/s. Consequently, a biunivocal relationship exists between the delay Δt₁, with which the depression spike S is received and the position of the vehicle in the train.

In view of this physical phenomenon, an automatic determination of the composition of a trackbound train becomes possible. To this end, it is sufficient to provide on each vehicle M, V₁, V₂, V₃,...Vₙ a pressure transducer 24 adapted to detect the drop of pressure Δp (figure 8) which signals the passage of the depression spike S. Each pressure transducer 24 is associated with a device 26 adapted to generate an electrical signal identifying of the type of vehicle. At the instant in which the pressure transducer 24 detects the passage of the depression spike S, the device 26 produces the signal characteristics of the vehicle and sends the same to a receiving unit. In the example shown in figure 1, the receiving unit 28 is disposed on the locomotive M and the various signal generating devices 26 are connected to a bus 30 connected to the receiving unit 28. The unit 28 is therefore able to detect the layout of the vehicles V₁, V₂, V₃,...Vₙ along the train as a function of the time sequence with which it receives the signals identifying the type of vehicle. The receiving unit 28 can then transmit to a ground system, e.g. by radio signals, the information relating to the composition of the train 10. As an alternative, as shown in figure 2, each signal generating device 26 is provided with a radio transmitter for transmitting the signal identifying the type of vehicle at the moment in which the pressure transducer 24 detects the passage of the depression spike in the braking pipe 12. A ground receiving unit 28' receives the radio signals and determines the composition of the train as a function of the time sequence with which the signals are received.

The principle on which the present invention is based can also be used for determining, in addition to the composition of the train, the orientation of each vehicle.

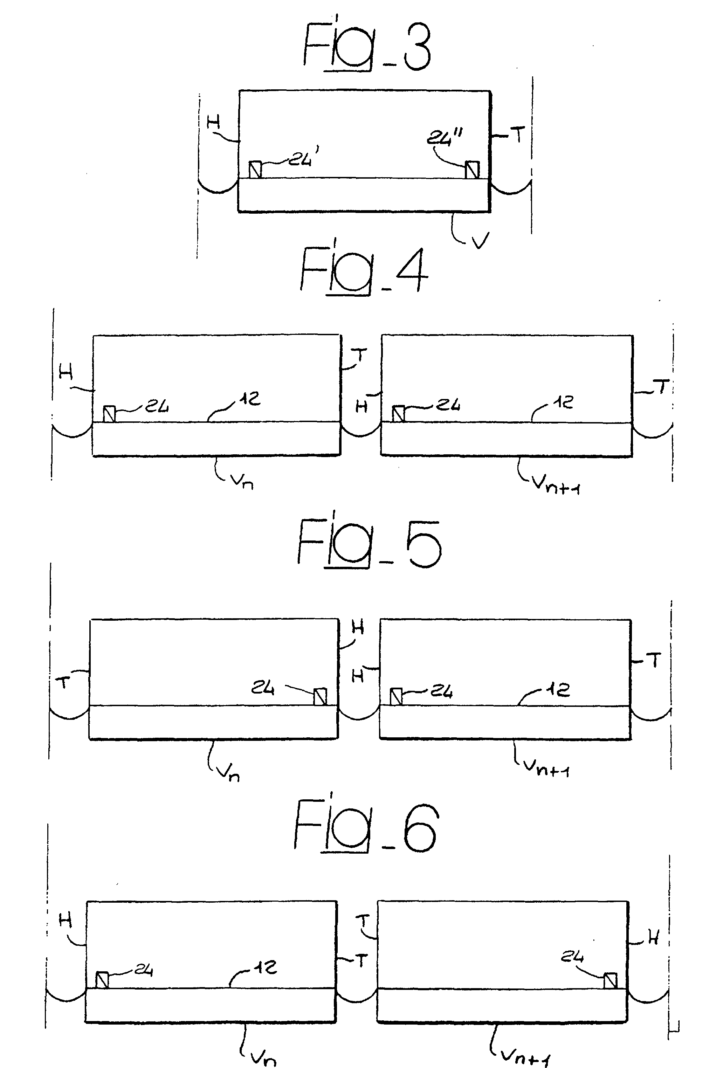

In the embodiment shown in figure 3, each vehicle V can be provided with two pressure transducer 24' and 24" disposed respectively in correspondence with the head section H and the tail section T of the vehicle. Each pressure transducer 24'. 24" is associated with a respective signal generating device. Therefore, the receiving unit 28 or 28' receives, for each vehicle, two signals shifted by a time interval Δt which depends on the distance between the two pressure transducer 24' and 24". Depending on the order with which the signals are received, it is possible to determine whether the vehicle V is oriented with the head H in the direction of movement or in the opposite direction.

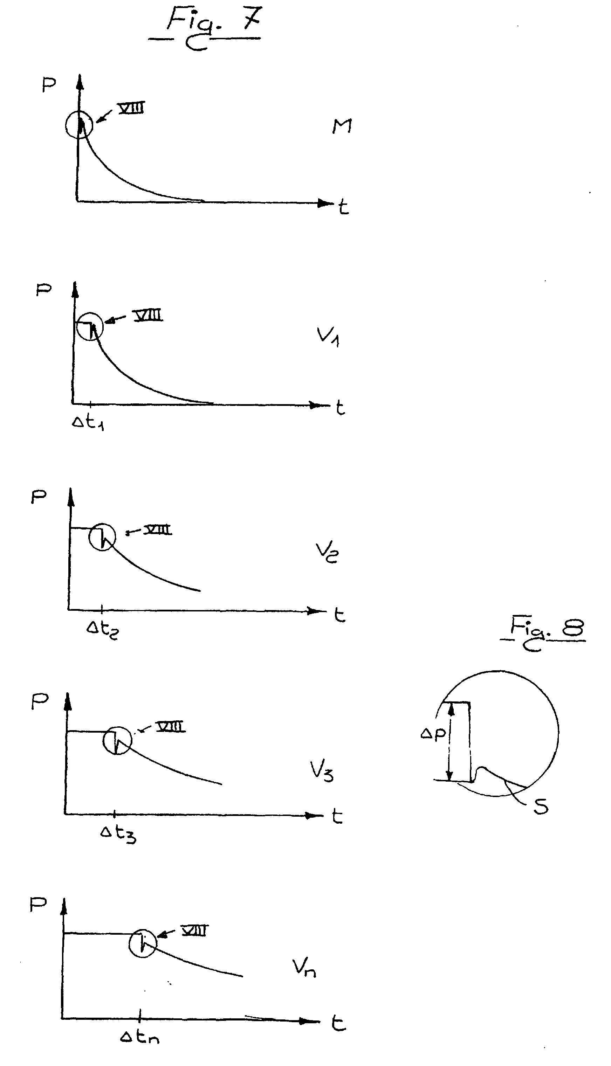

As an alternative, the determination of the orientation of the vehicles can be made by arranging a single transducer 24 on each vehicle. In this case, the transducer must be arranged in correspondence with one end of the vehicle. When the signals identifying two vehicles Vₙ and Vₙ₊₁ are received with a delay Δt substantially corresponding to the length of a vehicle, it means that the two vehicles are in the relative position shown in figure 4. On the contrary, if the signals of the two vehicles Vₙ and Vₙ₊₁ are received after a time interval Δt close to zero, it means that the two vehicles are in the relative position shown in figure 5. Finally, if the two signals of the vehicles Vₙ and Vₙ₊₁ are received with a delay Δt corresponding to the double of the length of a vehicle, it means that the two vehicles are in the relative position shown in figure 6. In this manner, the receiving unit can determine the layout of the vehicles along the train on the basis of the order with which the signals are received and, furthermore, can determine the orientation of each vehicle as a function of the delay Δt of the signal relating to the vehicle in question with respect to the signal of the preceding vehicle.

## Claims

1. A method for determining automatically the composition of a trackbound train including a plurality of vehicles (M, V₁, V₂, V₃,...Vₙ) coupled to each other, wherein the train (10) comprises a pneumatic braking system including a brake pipe (12) connected, in correspondence with each vehicle, to a brake assembly (18, 20, 22) which applies a braking force proportional to a pressure drop in the brake pipe (12) compared to a normal pressure, the method being **characterized by** the steps of:
- producing a release of pressure in the brake pipe so as to produce a depression (S) which propagates along the brake pipe (12),
- detecting on each vehicle (M, V₁, V₂, V₃,...Vₙ) the passage of said depression (S),
- generating a signal identifying the type of the vehicle after detecting said depression (S),
- receiving the signals identifying all the vehicles of the train, and
- determining the lay out of the vehicles along the train as a function of the single delays (Δt₁, Δt₂, Δt₃, Δtₙ) with which said depression (S) is detected, the determination of the composition of the train being carried out as a function of the time sequence with which the signals identifying the type of vehicle are received by a receiving unit (28, 28').

2. A method according to claim 1, **characterized in that** it comprises the step of generating, for each vehicle (M, V₁, V₂, V₃,...Vₙ) a first signal relating to the passage of said depression (S) in correspondence with a first end of the vehicle and a second signal relating to the passage of said depression in correspondence with a second end of the vehicle and of determining the orientation of the vehicle in the train as a function of the order with which the two signals relating to the same vehicle are received.

3. A method according to claim 1, **characterized in that** the signals identifying the type of vehicle are generated when said depression (S) passes in correspondence with one end of the vehicle and **in that** the orientation of the vehicles in the train is determined as a function of the delay (Δt) with which the signal identifying a vehicle is received with respect to the signal identifying the previous vehicle.

4. A method according to any of the preceding claims, **characterized in that** the signals identifying the type of vehicle are transmitted along the train by means of a data transmission line.

5. A method according to any of claims 1 to 3, **characterized in that** the signals identifying the type of vehicle are transmitted by radio.

6. A system for automatically determining the composition of a trackbound train including a plurality of vehicles (M, V₁, V₂, V₃,...Vₙ) coupled to each other, wherein the train (10) comprises a pneumatic braking system including a brake pipe (12) connected, in correspondence with each vehicle, to a brake assembly which applies a braking force proportional to a drop of pression in the brake pipe with respect to a normal pressure, **characterized in that** it comprises:
- at least a pressure transducer (24, 24', 24") on each vehicle (M, V₁, V₂, V₃,...Vₙ), adapted to detect the passage of a depression (S) on the brake pipe (12) following the application of a braking command,
- means (26) for generating an electrical signal identifying the type of vehicle upon detection of a depression by said pressure transducer (24, 24', 24"), and
- means (28, 28') for receiving the signals identifying the vehicles, provided for determining the layout of the vehicle along the train as a function of the individual delays (Δt) with which said depression (S) is detected, the determination of the composition of the train being carried out as a function of the time sequence with which the signals identifying the type of vehicle are received by a receiving unit (28, 28').

## Patentansprüche

1. Verfahren für selbsttätige Ermittlung der Zusammenstellung eines schienengebundenen Zuges mit einer Vielzahl von zusammmengekuppelten Wagen (M, V₁, V₂, V₃,...Vₙ), wobei der Zug (10) ein pneumatisches Bremssystem mit einer Bremsleitung (12) aufweist, die entsprechend jedem Wagen mit einer Bremsanordnung (18, 20, 22) verbunden ist, welche eine Bremskraft proportional zu einem Druckabfall in der Bremsleitung (12) im Vergleich zu einem Normaldruck anlegt, wobei das Verfahren **gekennzeichnet ist durch** die Schritte:
- Erzeugen eines Druckabfalls in der Bremsleitung, um eine Absenkung (S) herzustellen, die sich entlang der Bremsleitung (12) ausbreitet,
- Erfassen des Durchgangs der Absenkung (S) an jedem Wagen (M, V₁, V₂, V₃,...Vₙ),
- Erzeugen eines Signals, das den Wagentyp nach Erfassen der Absenkung (S) identifiziert,
- Empfangen der Signale, die alle Wagen des Zuges identifizieren, und
- Bestimmen der Zusammenstellung der Wagen entlang des Zuges als Funktion der einzelnen Verzögerungen
(Δt₁, Δt₂, Δt₃, Δtₙ), mit denen die Absenkung (S) erfasst wurde, wobei die Ermittlung der Zusammenstellung des Zuges als eine Funktion der Zeitabfolge durchgeführt wird, mit welcher die den Wagentyp identifizierenden Signale von einer Eapfanqseinheit (28, 28') empfangen werden.

2. Verfahren gemäß Anspruch 1, **dadurch gekennzeichnet, daß** es den Schritt des Erzeugens eines ersten Signales für jeden Wagen (M, V₁, V₂, V₃,...Vₙ), das sich auf den Durchgang der Absenkung (S) entsprechend einem ersten Ende des Wagens bezieht, und eines zweiten Signales umfasst, das sich auf den Durchgang der Absenkung entsprechend einem zweiten Ende des Wagens bezieht, und Bestimmem der Ausrichtung des Wagens im Zug als eine Funktion der Reihenfolge, mit welcher die zwei sich auf den gleichen Wagen beziehenden Signale empfangen werden.

3. Verfahren gemäß Anspruch 1, **dadurch gekennzeichnet, daß** die den Wagentyp identifizierenden Signale erzeugt werden, wenn die Absenkung (S) ein entsprechendes Ende des Wagens passiert und daß die Ausrichtung der Wagen im Zug als eine Funktion der Verzögerung (Δt) bestimmt wird, mit welcher das einen Wagen identifizierende Signal im Vergleich zu einem den vorhergehenden Wagen identifizierenden Signal empfangen wird.

4. Verfahren gemäß einem der vorangehenden Ansprüche, **dadurch gekennzeichnet, daß** die den Wagentyp identifizierenden Signale entlang des Zuges mittels eines Datenübertragungsleitung übertragen werden.

5. Verfahren gemäß einem der Ansprüche 1 bis 3, **dadurch gekennzeichnet, daß** die den Wagentyp identifizierenden Signale per Funk übertragen werden.

6. System für selbsttätige Ermittlung der Zusammenstellung eines schienengebundenen Zuges mit einer Vielzahl von zusammengekuppelten Wagen (M, V₁, V₂, V₃,...Vₙ), wobei der Zug (10) ein pneumatisches Bremsssystem mit einer Bremsleitung (12) aufweist, die entsprechend jedem Wagen mit einer Bremsanordnung verbunden ist, welche eine Bremskraft proportional zu einem Druckabfall in der Bremsleitung relativ zu einem Normaldruck anlegt, **dadurch gekennzeichnet, daß** es aufweist:
- wenigstens einen Drucksensor (24, 24', 24") an jedem Wagen (M, V₁, V₂, V₃,...Vₙ), um den Durchgang einer Absenkung (S) an der Bremsleitung (12) nach Anlegen eines Bremsbefehls zu erfassen,
- Mittel (26) zum Erzeugen eines elektrischen Signals, das den Wagentyp nach Erfassung einer Absenkung durch den Drucksensor (24, 24', 24") identifiziert, und
- Mittel (28, 28') zum Empfang der die Wagen identifizierenden Signale, um die Zusammenstellung der Wagen entlang des Zuges als eine Funktion individueller Verzögerungen (Δt) zu bestimmen, mit denen die Absenkung (S) detektiert wird, wobei die Ermittlung der Zusammenstellung des Zuges als eine Funktion der Zeitabfolge durchgeführt wird, mit welcher die den Wagentyp identifizierenden Signale von einer Empfangseinheit (28, 28') empfangen werden.

## Revendications

1. Procédé de détermination automatique de la composition d'un train de véhicules sur rails, comprenant plusieurs véhicules (M, V₁, V₂, V₃,... Vₙ) couplés mutuellement, dans lequel le train (10) comporte un système de freinage pneumatique qui comporte une conduite de freinage (12) raccordée, d'une manière correspondant à chaque véhicule, à un ensemble de freinage (18, 20, 22) qui applique une force de freinage proportionnelle à la réduction de pression dans la conduite de freinage (12) par rapport à une pression normale, le procédé étant **caractérisé par** les étapes suivantes :
la production d'une réduction de pression dans la conduite de freinage pour la production d'une dépression (S) qui se propage le long de la conduite de freinage (12),
la détection, sur chaque véhicule (M, V₁, V₂, V₃,... Vₙ), du passage de cette dépression (S),
la création d'un signal qui identifie le type de véhicule après détection de la dépression (S),
la réception des signaux identifiant tous les véhicules du train,
la détermination de l'arrangement des véhicules le long du train en fonction des retards uniques (Δt₁, Δt₂, Δt₃,... Δtₙ) avec lesquels la dépression (S) est détectée, la détermination de la composition du train étant réalisée en fonction de la séquence dans le tempe avec laquelle les signaux identifiant le type de véhicule sont reçue par une unité réceptrice (28, 28').

2. Procédé selon la revendication 1, **caractérisé en ce qu'**il comprend l'étape de création, pour chaque véhicule (M, V₁, V₂, V₃,... Vₙ), d'un premier signal lié au passage de la dépression (S) et correspondant à une première extrémité du véhicule et d'un second signal lié au passage de la dépression et correspondant à une seconde extrémité du véhicule, et de détermination de l'orientation du véhicule dans le train en fonction de l'ordre avec lequel les deux signaux relatifs au même véhicule sont reçus.

3. Procédé selon la revendication 1, **caractérisé en ce que** les signaux identifiant le type de véhicule sont créés lorsque la dépression (S) passe au niveau d'une première extrémité du véhicule, et **en ce que** l'orientation du véhicule dans le train est déterminée en fonction du retard (Δt) avec lequel le signal identifiant un véhicule est reçu par rapport au signal identifiant le véhicule précédent.

4. Procédé selon l'une quelconque des revendications précédentes, **caractérisé en ce que** les signaux identifiant le type de véhicule sont transmis le long du train par une ligne de transmission de données.

5. Procédé selon l'une quelconque des revendications 1 à 3, **caractérisé en ce que** les signaux identifiant le type de véhicule sont transmis radioélectriquement.

6. Système de détermination automatique de la composition d'un train de véhicules sur rails, comprenant plusieurs véhicules (M, V₁, V₂, V₃,... Vₙ) couplés mutuellement, dans lequel le train (10) comporte un système de freinage pneumatique qui comporte une conduite de freinage (12) qui est raccordée, d'une manière correspondant à chaque véhicule, à un ensemble de freinage qui applique une force de freinage proportionnelle à une réduction de pression dans la conduite de freinage par rapport à une pression normale, **caractérisé en ce qu'**il comprend :
au moins un transducteur de pression (24, 24', 24") monté sur chaque véhicule (M, V₁, V₂, V₃,... Vₙ) et destiné à détecter le passage d'une dépression (S) dans la conduite de freinage (12) après l'application d'une commande de freinage,
un dispositif (26) destiné à créer un signal électrique qui identifie le type de véhicule après détection d'une dépression par le transducteur de pression (24, 24', 24"), et
un dispositif (28, 28') destiné à recevoir les signaux identifiant les véhicules, et à déterminer l'arrangement du véhicule le long du train en fonction des retards individuels (Δt) avec lesquels la dépression (S) est détectée, la détermination de la composition du train étant effectuée en fonction de la séquence temporelle avec laquelle les signaux identifiant le type de véhicule sont reçus par une unité réceptrice (28, 28').
